Europäisches Patentamt

(19) European Patent Office

Office européen des brevets

(11) Numéro de publication : **0 288 381 B1**

## (12) FASCICULE DE BREVET EUROPEEN

(45) Date de publication du fascicule du brevet :
06.11.91 Bulletin 91/45

(51) Int. Cl.$^5$ : **G21C 7/00, G21D 3/00**

(21) Numéro de dépôt : **88400959.8**

(22) Date de dépôt : **20.04.88**

(54) **Procédé de contrôle d'un réacteur nucléaire.**

(30) Priorité : 24.04.87 FR 8705824

(43) Date de publication de la demande :
26.10.88 Bulletin 88/43

(45) Mention de la délivrance du brevet :
06.11.91 Bulletin 91/45

(84) Etats contractants désignés :
**BE CH DE ES GB LI**

(56) Documents cités :
**EP-A- 0 102 068**
**DE-A- 2 025 975**
**FR-A- 1 395 221**
**GB-A- 2 171 242**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Bernard, Patrice
7, Place des Héliades
F-13770 Venelles (FR)**
Inventeur : **Sauvage, Laurent
165, Avenue de la Liberté
F-84120 Pertuis (FR)**
Inventeur : **Girard, Henri
48, rue Paul Valéry
F-84120 Pertuis (FR)**
Inventeur : **Ferrero, Jean-Pierre
29, Le Tivoli
F-13090 Aix en Provence (FR)**

(74) Mandataire : **Mongrédien, André et al
c/o BREVATOME 25, rue de Ponthieu
F-75008 Paris (FR)**

## Description

La présente invention a pour objet un procédé de contrôle d'un réacteur nucléaire consistant à contrôler le flux neutronique et la distribution de puissance dans le coeur du réacteur.

Ce contrôle comprend une étape de détermination du flux neutronique et de la distribution de puissance, et une étape de régulation par déplacement de barres de commande dans le coeur du réacteur et/ou modification de la concentration en bore dans le circuit primaire du réacteur, en fonction du flux neutronique et de la distribution de puissance déterminés.

Le contrôle peut notamment être réalisé en fonction du résultat de la comparaison entre le flux neutronique et la distribution de puissance déterminés et des valeurs de consigne pour ledit flux neutronique et ladite distribution de puissance, lesdites valeurs de consigne représentant des valeurs limites pour les critères de sécurité du réacteur.

Le procédé de l'invention permet d'obtenir très rapidement les valeurs de flux neutronique et de distribution de puissance. Cette propriété permet des applications en ligne, telles que :

— détection d'anomalies sur la position des barres de commande, la concentration en bore,

— simulation prévisionnelle du comportement du coeur en mode transitoire et recherche d'une stratégie optimale de pilotage du coeur,

— aide au suivi de l'état physique du coeur et à l'interprétation des mesures sur le coeur, par exemple pour les mesures de réactivité.

Cette propriété peut également être utilisée dans des applications hors ligne, telles que :

— calculs de conception du coeur,

— analyse de transitoires normaux ou anormaux,

— calculs détaillés de l'évolution des compositions isotopiques du combustible selon le taux d'irradiation,

— calculs de rechargement d'assemblages combustibles dans les coeurs des réacteurs en exploitation,

— études de nouvelles gestions de coeur,

— études de nouvelles stratégies de contrôle du coeur.

De manière générale, le coeur du réacteur nucléaire comprend des assemblages constitués de matériaux fissiles, avec lesquels des neutrons réagissent suivant les principaux processus suivants :

— choc sur des noyaux de matériaux fissiles, avec modification de la direction et de la vitesse des neutrons subissant le choc,

— capture par un noyau, sans émission de nouveaux neutrons,

— absorption par un noyau, avec émission de nouveaux neutrons. La fission est le phénomène prépondérant dans les réacteurs nucléaires. Elle est associée à un dégagement important d'énergie.

Dans l'intervalle de temps séparant deux événements d'interaction, le déplacement des neutrons est rectiligne et uniforme.

Un état du coeur peut être caractérisé par les propriétés des matériaux fissiles qu'il contient, la répartition des neutrons dans le coeur et leur interaction avec les noyaux des matériaux fissiles.

Un état du coeur est donc défini par un ensemble de paramètres et, plus exactement, par la valeur de chacun de ces paramètres en chaque point du coeur. En pratique, l'état du coeur est défini par la valeur de chaque paramètre dans un ensemble de zones, ou mailles, dont l'ensemble représente le volume du coeur.

Les mailles sont de préférence identiques et peuvent consister par exemple en des volumes cubiques. Dans ce cas, pour un réacteur nucléaire à eau sous pression de 900 MWe, le coeur correspond par exemple à un ensemble d'environ 22000 mailles cubiques, chacune ayant environ 10 cm de côté. Dans la suite du texte, le nombre total de mailles est noté J et l'indice de maille j ($1 \leq j \leq J$).

Pour la détermination pratique de la distribution de flux et de la puissance dans le coeur du réacteur nucléaire, le domaine des vitesses des neutrons est classiquement décomposé en intervalles finis, désignés par l'indice g, où g varie de 1 à G, G étant le nombre total de groupes de vitesse.

Les grandeurs décrivant la répartition des neutrons dans le coeur sont alors :

— la densité neutronique n(j,g) qui représente le nombre de neutrons par unité de volume qui, dans la maille j, sont dans le groupe de vitesse g,

— le flux neutronique $\phi$(j,g) dans la maille j qui est par définition, le produit de la densité neutronique n(j,g) par la vitesse moyenne des neutrons du groupe de vitesse g.

Les grandeurs décrivant les caractéristiques du coeur, vis-à-vis de l'interaction avec les neutrons (appelées dans la suite du texte probabilités d'interaction) sont :

— la section efficace macroscopique différentielle de diffusion $\Sigma s(j,g \rightarrow g')$ égale à $Rs(j,g \rightarrow g')/\phi(j,g)$, où $Rs(j,g \rightarrow g')$ est le nombre de neutrons du groupe de vitesse g subissant, par unité de temps et de volume, un choc dans la maille j, et étant diffusés, après le choc, avec une nouvelle vitesse dans le groupe de vitesse g',

EP 0 288 381 B1

— la section efficace macroscopique totale de diffusion $\Sigma s(j,g)$ définie par :

$$\sum_{g'=1}^{G} \Sigma s(j,g \to g')$$

et égale à $Rs(j,g)/\phi(j,g)$, où $Rs(j,g)$ est le nombre de neutrons du groupe de vitesse g subissant par unité de temps et de volume, un choc,

— la section efficace macroscopique de capture $\Sigma c(j,g)$ égale à $Rc(j,g)/\phi(j,g)$, où $Rc(j,g)$ représente le nombre de neutrons, du groupe de vitesse g, absorbés par unité de temps et par unité de volume sans réémission de nouveaux neutrons,

— la section efficace macroscopique de fission $\Sigma f(j,g)$ égale à $Rf(j,g)/\phi(j,g)$, où $Rf(j,g)$ représente le nombre de fissions, par unité de temps et par unité de volume, induites par les neutrons du groupe de vitesse g. Lors d'une fission, il y a émission de nouveaux neutrons en moyenne et un dégagement d'énergie d'environ 200 MeV par fission. Nous considèrerons par la suite, pour simplifier, que le rapport $\kappa/\nu$, "$\kappa$", kappa dési-gnant le nombre de joules par fission et $\nu$ "nu" le nombre moyen de nouveaux neutrons engendrés par fission, est constant,

— la section efficace macroscopique d'absorption $\Sigma a(j,g)$ dans le groupe g égale à $\Sigma c(j,g) + \Sigma f(j,g)$,

— la section efficace macroscopique totale $\Sigma t(j,g)$ dans le groupe g égale à $\Sigma a(j,g) + \Sigma s(j,g)$.

Le nombre total S(j) de neutrons émis par la maille j, appelé aussi source de neutrons, par unité de temps et de volume, est défini par :

$$S(j) = \sum_{g=1}^{G} \nu \cdot \Sigma f(j,g) \cdot \phi(j,g)$$

De même, la puissance P(j) émise par la maille j est définie par P(j) = $(\kappa/\nu) \cdot S(j)$ (si on considère que le rapport $\kappa/\nu$ est constant).

On sait que la connaissance des paramètres $\Sigma s(j,g \to g')$, $\Sigma a(j,g)$, $\Sigma t(j,g)$ et $\nu \cdot \Sigma f(j,g)$ dans chaque maille j, $1 \le j \le J$, permet de déterminer la valeur des grandeurs $\phi(j,g)$, S(j) et P(j).

Un premier procédé connu consiste à calculer le flux neutronique $\phi(j,g)$ dans chaque maille j par une méthode aux différences finies. Ce procédé est décrit notamment dans les ouvrages "Nuclear Reactor Theory" de George BELL et Samuel GLASSTONE, Van Nostrand Reinhold Company et "Introduction à l'analyse numérique matricielle et à l'optimisation" de P.G. CIARLET, ed. MASSON.

Un second procédé connu consiste à calculer le flux neutronique $\phi(j,g)$ dans chaque maille j par une méthode nodale.

Ces deux procédés reposent sur des méthodes itératives dont l'étape de calcul principale consiste à inverser une matrice de taille J × J, où J représente le nombre de mailles et est égal à quelques dizaines de mille. On comprend que ce calcul demande des moyens de traitement puissants qui le rend coûteux. Pour diminuer ce coût, on peut utiliser des moyens de traitement moins puissants, mais il faut alors un temps de calcul plus long pour déterminer le flux neutronique et la puissance dans le coeur du réacteur, ce qui n'est pas satisfaisant dans le cas de la surveillance en ligne du coeur du réacteur.

L'invention a pour but de permettre un contrôle en temps réel du coeur du réacteur. Ce but est obtenu grâce à une méthode de détermination rapide du flux neutronique et de la puissance, sans requérir une inversion de matrice de grande taille.

De manière générale, l'invention consiste à déterminer le flux neutronique sous la forme d'une somme entre une première composante de flux neutronique, associée à un état prédéterminé du coeur, et une seconde composante de flux neutronique, associée à l'état réel du coeur.

De manière précise, l'invention a pour objet un procédé de contrôle d'un réacteur nucléaire comprenant un coeur contenant des assemblages de matériaux fissiles, la fission des noyaux desdits matériaux étant provoquée par des interactions avec des neutrons et engendrant à son tour des neutrons, ledit réacteur nucléaire comprenant en outre un moyen de régulation du flux neutronique dans le coeur dudit réacteur et de la puissance dégagée par le coeur dudit réacteur, ledit moyen de régulation comprenant au moins un assemblage de barres de commande déplaçables dans le coeur dudit réacteur, ledit procédé étant caractérisé en ce que :

A) — on détermine, de manière itérative, les flux neutroniques $\phi(j,g)$, pour chaque zone ou maille j, $1 \le j \le$

3

J, d'un ensemble de mailles correspondant au volume du coeur du réacteur et pour chaque groupe de vitesse g, $1 \leq g \leq G$, d'un ensemble de groupes de vitesses pour les neutrons ; et les nombres de neutrons, ou sources, S(j) émis par chaque maille j, $1 \leq j \leq J$, par unité de volume et de temps, la détermination desdites valeurs consistant à répéter la suite d'opérations suivantes jusqu'à la convergence desdites valeurs:

a) calcul de premières composantes de flux neutronique $\phi^0(j,g)$, $1 \leq j \leq J$, en fonction de matrices de couplage prédéterminée [$\psi$g], $1 \leq g \leq G$, et des sources S(j), chaque élément $\psi$g(j,k), $1 \leq k \leq K$ et $1 \leq l \leq J$, exprimant pour des neutrons du groupe de vitesse g, $1 \leq g \leq G$, le couplage entre la maille j et les mailles voisines k correspondant à des probabilités d'interaction prédéterminées des neutrons avec les matériaux fissiles du coeur, pour chaque maille j, $1 \leq j \leq J$,

b) calcul des probabilités d'interaction réelles des neutrons dans le coeur en fonction des paramètres physiques décrivant l'état du coeur,

c) calcul de secondes composantes de flux neutronique $\phi^1(j,g)$, $1 \leq j \leq J$, en fonction des flux neutroniques $\phi^0(j,g)$ des probabilités d'interaction prédéterminées des neutrons dans le coeur et des probabilités d'interaction réelles des neutrons dans le coeur,

d) calcul des flux neutroniques $\phi(j,g)$ dans chaque maille j comme somme des premières et secondes composantes de flux neutronique,

e) calcul de nouvelles sources NS(j), $1 \leq j \leq J$, associées à chaque flux neutronique $\phi(j,g)$, et des nouvelles valeurs des sources S(j) par la relation :

$$S(j) = \frac{NS(j)}{\sum_{j=1}^{J} NS(j)}$$

f) calcul des puissances P(j) émises dans chaque maille j en fonction de la puissance totale P émise et des sources S(j),

B) — on commande le moyen de régulation en fonction des flux neutroniques $\phi(j,g)$ et des puissances P(j).

De manière préférée, la probabilité d'interaction des neutrons dans le coeur est définie par l'ensemble des paramètres suivants, pour chaque maille j, $1 \leq j \leq J$ :

— sections efficaces macroscopiques de diffusion $\Sigma s(j,g \rightarrow g')$ des neutrons du groupe de vitesse g, $1 \leq g \leq G$, dans le groupe de vitesse g', $g' \neq g$

— section efficace mascroscopique d'absorption $\Sigma a(j,g)$ des neutrons du groupe de vitesse g, $1 \leq g \leq G$,

— section efficace macroscopique de fission $\Sigma f(j,g)$ des neutrons du groupe de vitesse g, $1 \leq g \leq G$.

De la même manière, les probabilités d'interaction prédéterminées des neutrons dans le coeur peuvent être définies pour chaque maille j, $1 \leq j \leq J$, et chaque groupe de vitesse g, $1 \leq g \leq G$, par :

— des sections efficaces macroscopiques de diffusion $\Sigma_s^0(j,g \rightarrow g')$ dont les valeurs sont des valeurs possibles pour ledit coeur,

— une section efficace macroscopique d'absorption $\Sigma_a^0(j,g)$ dont la valeur est une valeur possible pour ledit coeur,

— une section efficace macroscopique de fission $\Sigma_f^0(j,g)$ de valeur égale à zéro.

De manière préférée, pour chaque maille j, $1 \leq j \leq J$, l'ensemble des secondes composantes de flux neutronique $\phi^1(j,g)$, $1 \leq g \leq G$, est déterminé comme solution du système à G équations linéaires :

$$- \Sigma t(j,g) \cdot \phi^1(j,g) + \sum_{g=1}^{G} \Sigma s(j,g \rightarrow g') \cdot \phi^1(j,g) =$$

$$\Sigma t(j,g) \cdot \phi^0(j,g) - \sum_{g'=1}^{G} \Sigma s(j,g' \rightarrow g) \cdot \phi^0(j,g')$$

$$\text{où} \quad \Sigma t(j,g) = \Sigma a(j,g) + \sum_{g'=1}^{G} \Sigma s(j,g \rightarrow g'),$$

$$\Sigma \overset{1}{t}(j,g) = \Sigma t(j,g) - \left[ \Sigma \overset{0}{a}(j,g) + \sum_{g'=1}^{G} \Sigma \overset{0}{s}(j,g \rightarrow g') \right]$$

$$\text{et} \quad \Sigma \overset{1}{s}(j,g \rightarrow g') = \Sigma s(j,g \rightarrow g') - \Sigma \overset{0}{s}(j,g \rightarrow g').$$

Les caractéristiques et avantages de l'invention ressortiront mieux de la description qui va suivre, donnée à titre illustratif, mais non limitatif, en référence aux dessins annexés, sur lesquels :

— la figure 1 est une vue en coupe de la cuve d'un réacteur nucléaire, et

— les figures 2a et 2b sont un organigramme illustrant le procédé de l'invention.

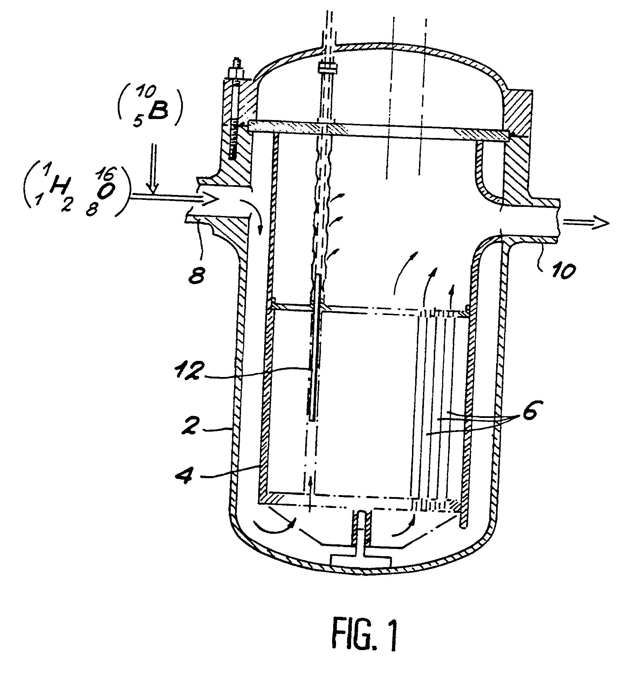

La figure 1 représente une vue en coupe d'une cuve 2 d'un réacteur nucléaire à eau pressurisée. Le coeur de ce réacteur nucléaire comprend :

a) — du combustible nucléaire (matériaux fissiles) contenu dans un gainage appelé crayons combustibles 6, disposés verticalement,

b) — parfois, des crayons absorbant les neutrons, appelés souvent crayons de poisons consommables. Les crayons combustibles et absorbants sont maintenus dans des structures mécaniques, appelées assemblages. Le coeur est constitué d'assemblages et le réseau formé par les crayons est en général régulier,

c) — d'un fluide de refroidissement amené par un conduit d'admission 8 et évacué par un conduit de sortie 10 relié à une pompe. Ce fluide s'écoule verticalement de bas en haut du coeur et est constitué d'eau sous forme $^1_1H_2{}^{16}_8O$ ayant la propriété de ralentir les neutrons. Dans le cas de la filière à eau pressurisée, l'eau peut contenir, en solution, des noyaux absorbant les neutrons, en particulier des noyaux de bore $^{10}_5B$,

d) — de barres de commande 12 contenant des matériaux absorbant les neutrons qui peuvent être déplacées verticalement dans le coeur, au cours du fonctionnement du réacteur. Ces barres de commande sont destinées au contrôle rapide de la puissance dans le coeur.

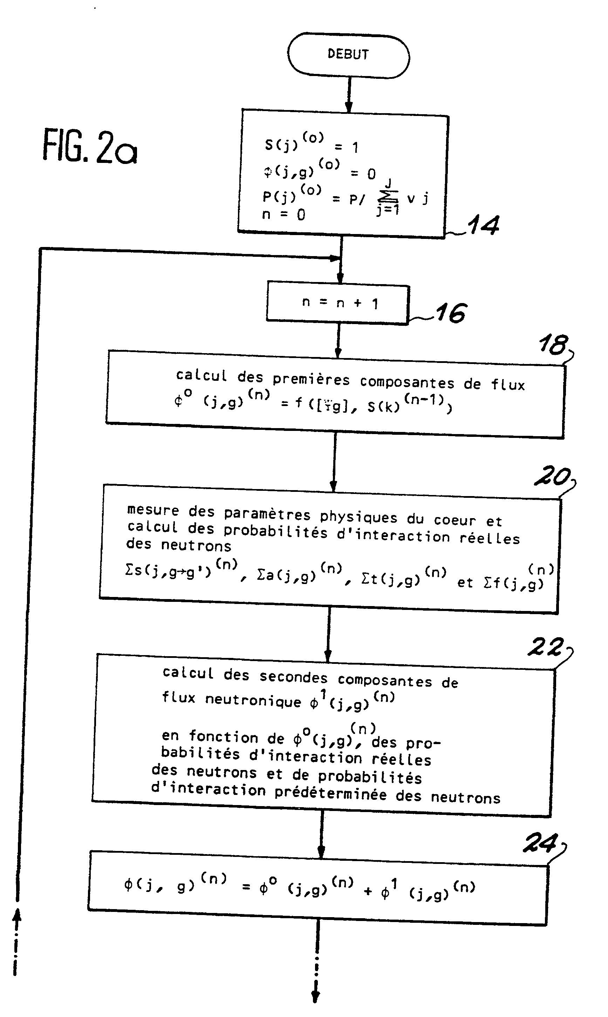

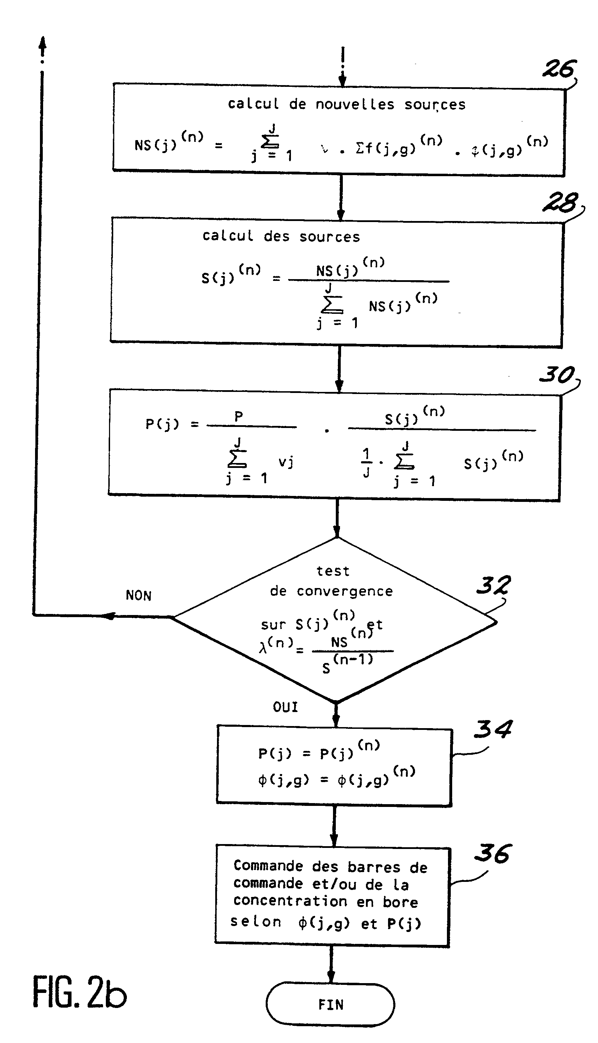

On va maintenant décrire le procédé de l'invention en se référant à l'organigramme des figures 2a et 2b. Pour ne pas alourdir inutilement la description, on se placera dans le cas simplifié dans lequel les sources de neutrons sont composées uniquement des neutrons de fission prompts. On évoquera à la fin de la description le cas général, dit cinétique, dans lequel les sources de neutrons comprennent également les neutrons retardés.

Ce procédé comporte une étape de détermination du flux neutronique $\phi(j,g)$, de la puissance $P(j)$ et de la source $S(j)$ dans chaque maille $j$, par un calcul itératif, et une étape d'utilisation des grandeurs physiques déterminées pour commander les moyens de régulation du coeur.

Le procédé de l'invention débute par une opération d'initialisation des valeurs des sources $S(j)$, des flux neutroniques $\phi(j,g)$ et des puissances $P(j)$.

La valeur initiale des sources $S(j)$ peut être fixée arbitrairement, par exemple à la valeur 1. Elles peuvent plus avantageusement être prises égales, pour le calcul des flux neutroniques et des puissances à un instant $t$, à la valeur calculée selon le procédé de l'invention à un instant antérieur $t'$ ($t' < t$). Dans le premier cas, on constate expérimentalement que la première étape du procédé de l'invention requiert un nombre d'itérations $n$ de l'ordre de 100, alors que dans le second cas $n$ est de l'ordre de quelques unités.

De la même manière, les flux neutroniques $\phi(j,g)$ peuvent être fixés initialement à la valeur zéro, mais ils peuvent avantageusement être fixés à des valeurs déterminées à un instant précédent par le procédé de l'invention.

Enfin, les puissances $P(j)$ sont initialisées de préférence à une valeur :

$$\frac{P}{\displaystyle\sum_{j=1}^{J} v_j}$$

où P est la puissance totale du coeur, qui est connu par des mesures sur le coeur, et $v_j$ est le volume de la maille j.

L'opération 16 de la figure 2a note l'incrémentation de l'indice d'itération n. Chaque itération comporte une suite d'opérations 18-30 et se termine par un test de convergence 32.

L'opération 18 concerne le calcul d'une première composante de flux neutronique $\phi^0(j,g)$ du flux neutronique réel $\phi(j,g)$. Chaque première composante $\phi^0(j,g)^{(n)}$, à la $n^{ième}$ itération, est exprimée en fonction d'une matrice de couplage $[\psi g]$ prédéterminée et des sources $S(j)^{(n-1)}$ calculées à l'itération précédente n-1. Il y a au total G matrices de couplage, une par groupe de vitesse g, et chacune à une taille de K × K, où K est le nombre de mailles voisines d'une maille quelconque.

Les matrices de couplage $[\psi g]$ sont associées au domaine d'influence des échanges neutroniques entre des mailles k, $1 \le k \le K$, voisines d'une maille j (et incluant celle-ci) et la maille j. Ces matrices de couplage prédéterminées sont calculées pour un état prédéterminé du coeur (appelée aussi milieu de référence), c'est-à-dire pour des probabilités d'interaction prédéterminées des neutrons dans le coeur.

Les termes $\psi g(j,k)$, $1 \le j \le J$ et $1 \le k \le K$, des matrices de couplage $[\psi g]$ sont définis par la relation suivante:

$$\psi g(j,k) = \frac{1}{vj \cdot vk} \iiint_{maille\ j} \iiint_{maille\ k} \psi g(d(x_j,x_k)) \cdot d^3 x_j \cdot d^3 x_k$$

$$où\ v_j = \iiint_{maille\ j} d^3 x_j \quad et \quad v_k = \iiint_{maille\ k} d^3 x_k$$

sont les volumes des mailles j et k, et $r = d(x_j,x_k)$ est la distance entre un point $x_j$ de la maille j et un point $x_k$ de la maille k.

Le terme $\psi g(r)$ représente le flux neutronique en $cm^{-2}$ en un point $x_j$ de la maille j, à la distance $r = d(x_j,x_k)$ créé par une source située au point $x_k$ de la maille k et émettant un neutron/seconde suivant un spectre de fission $\chi_g$.

Le terme $\psi g(j,k)$ représente le flux moyen dans la maille j produit par une source répartie uniformément dans la maille k et émettant un neutron/seconde suivant le spectre de fission $\chi_g$ "khi" dans le groupe de vitesse g.

Pour un spectre de fission $\chi_g$, les termes $\psi g(r)$ peuvent être déterminés par exemple, de manière connue, à partir du code de transport ANISN des neutrons dans un milieu défini dans le rapport AEC Research and Development report K1693 de W.W Engle "Users manual for ANISN one dimensional discret ordinates transport code with anisotropie scattering". Les termes $\psi g(j,k)$ sont ensuite obtenus par intégration. Cette intégration peut introduire une certaine imprécision dans les valeurs des termes $\psi g(j,k)$. Il est possible de s'assurer que les valeurs trouvées sont correctes en vérifiant que l'équation :

$$\sum_{k=1}^{K} \sum_{g=1}^{G} \psi g(j,k) \cdot \Sigma_{a,g}^0 \cdot v_k = 1$$

est satisfaite, ce qui signifie que dans le domaine formé par les K mailles, il y a absorption d'un neutron. (Dans

l'équation, $\Sigma^0_{a,g}$ est la section efficace macroscopique d'absorption du milieu de référence pour le groupe g).

Les premières composantes de flux neutroniques $\phi^0(j,g)^{(n)}$ peuvent être calculées à partir des matrices de couplage $[\psi g]$ notamment selon l'équation :

$$\phi(j,g)^{(n)} = \sum_{k=1}^{K} \psi g(j,k) \cdot S(j)^{(n-1)} \cdot v_k$$

où $v_k$ est le volume de la maille k.

Les probabilités d'interaction prédéterminées, c'est-à-dire associées au milieu de référence, sont définies par exemple par des valeurs prédéterminées des sections efficaces macroscopiques $\Sigma^0_a(j,g)$, $\Sigma^0_s(j,g \rightarrow g')$, $\Sigma^0_f(j,g)$ et $\Sigma^0_f(j,g)$. De préférence on choisit $\Sigma^0_f(j,g)$ égale à zéro.

Chaque coefficient $\psi g(j,k)$ représente le flux dans le groupe g et la maille j, lorsqu'un neutron est émis par unité de volume et par unité de temps, de façon homogène dans la maille k suivant le spectre de fission, dans un coeur pour lequel les probabilités d'interaction des neutrons sont lesdites probabilités d'interaction prédéterminées.

Les valeurs sont définies pour chaque type d'assemblage et sont choisies de préférence de telle sorte que les sections efficaces macroscopiques prédéterminées soient proches des sections efficaces macroscopiques réelles dans le coeur en régime normal. Ceci permet d'avoir une plus grande précision dans le calcul des flux neutroniques $\phi(j,g)$ et des puissances P(j). On peut choisir par exemple une valeur pour chaque section efficace macroscopique prédéterminée égale à la valeur moyenne de la gamme d'amplitude possible pour cette section efficace macroscopique.

L'opération suivante 20 du procédé consiste à évaluer des secondes composantes de flux neutroniques $\phi^1(j,g)^{(n)}$ en fonction des probabilités d'interaction réelles des neutrons dans le coeur. Celles-ci se déduisent, de manière connue, des valeurs des paramètres physiques décrivant l'état du coeur, les valeurs de ces paramètres physiques étant elles-mêmes, de manière connue, soit détectables directement par des capteurs, soit évaluables à partir de mesures indirectes.

Les paramètres physiques généralement connus sont :

a) — la position PBCq de chaque barre de commande q, $1 \leq q \leq Q$, où Q est le nombre total des barres de commande,

b) — la température d'entrée $\theta_E$ du fluide de refroidissement dans le coeur,

c) — la pression PR du fluide de refroidissement dans le coeur,

d) — la concentration en bore $C_B$ dans le coeur,

e) — la puissance totale P fournie par le coeur,

f) — la description de la position des assemblages de chaque type dans le coeur, et

g) — les flux neutroniques $\phi(j,g)^{(n-1)}$ et les puissances P(j)$^{(n-1)}$ calculés à l'instant d'itération précédent n−1.

A partir de ces paramètres physiques, on sait évaluer, pour chaque maille j, un ensemble de paramètres locaux, tels que :

a) — la température du combustible Tu(j),

b) — la température du fluide de refroidissement $\theta(j)$

c) — la densité du fluide de refroidissement (j),

d) — la concentration Xe(j) en noyaux de $^{135}_{54}Xe$,

e) — le taux d'irradiation, ou d'usure du combustible, I(j),

f) — l'état $x_m(j)$ (présence ou absence) d'une barre de commande de type m dans la maille j,

g) — un paramètre p(j) caractérisant les assemblages du point de vue de leurs propriétés neutroniques équivalentes : présence ou non de poisons consommables, enrichissement initial en $^{235}_{92}U$, teneur initiale en plutonium, composition isotopique initiale du plutonium,...

Plus précisément, les paramètres Tu(j), $\theta(j)$ et (j) sont calculés par des relations exprimant la thermique du noyau combustible et la thermohydraulique de l'eau s'écoulant dans les crayons à partir des paramètres physiques $\theta_E$, PR, PBCq, P et des puissances P(j) ; le paramètre Xe(j) à partir des flux neutroniques $\phi(j,g)$ par des relations exprimant la formation et la disparition des noyaux de $^{135}_{54}Xe$ ; et le paramètre I(j) par une relation d'usure fonction du temps.

On pourra se reporter à l'ouvrage "Nuclear Reactor Theory" de George I. BELL et Samuel GLASSTONE, Van Nostrand Reinhold Company pour une description de méthodes d'obtention des paramètres locaux à partir des paramètres physiques.

Les probabilités d'interaction des neutrons dans le coeur, qui peuvent être définies par exemple par les sections efficaces macroscopiques $\Sigma s(j,g \to g')$, $\Sigma a(j,g)$, $\Sigma t(j,g)$ et $\Sigma f(j,g)$, sont ensuite déduites de manière connue, à partir des paramètres locaux et de la concentration en bore $C_B$. Un mode de calcul des sections efficaces macroscopiques en fonction des paramètres locaux et de $C_B$ est donné par exemple dans le document Proceedings of a specialist's meeting on "Homogenization methods in reactor physics" issued by the International Atomic Energy Agency, Vienna, 1980.

Après l'opération 20 qui porte sur l'évaluation des sections efficaces macroscopiques réelles, c'est-à-dire celles correspondant aux valeurs effectives des paramètres physiques du coeur, on calcule, dans une opération 22 des secondes composantes de flux neutronique $\phi^1(j,g)^{(n)}$.

Celles-ci s'expriment en fonction des premières composantes de flux neutronique $\phi^0(j,g)^{(n)}$, des probabilités d'interaction prédéterminées des neutrons dans le coeur et des probabilités d'interaction réelles des neutrons dans le coeur. Cette relation peut être exprimée, pour chaque maille j, $1 \leq j \leq J$, par un système linéaire à G équations :

$$- \Sigma t(j,g)^{(n)} \cdot \phi^1(j,g)^{(n)} + \sum_{g=1}^{G} \Sigma s(j,g \to g')^{(n)} \cdot \phi^1(j,g)^{(n)}$$

$$= \Sigma^1 t(j,g)^{(n)} \cdot \phi^0(j,g)^{(n)} - \sum_{g=1}^{G} \Sigma^1 s(j,g' \to g)^{(n)} \cdot \phi^0(j,g')^{(n)},$$

$$\text{où} \quad \Sigma^1 t(j,g)^{(n)} = \Sigma t(j,g)^{(n)} - \Sigma^0 t(j,g)$$

$$\text{et} \quad \Sigma^1 s(j,g' \to g)^{(n)} = \Sigma s(j,g' \to g)^{(n)} - \Sigma^0 s(j,g' \to g)$$

Pour chaque maille, il s'agit donc de résoudre un système de G équations à G inconnues $\phi^1(j,g)^{(n)}$, $1 \leq g \leq G$. Le nombre G de groupes de vitesse est en général de quelques unités ; le système linéaire peut donc être résolu simplement en inversant la matrice de taille $G \times G$ associée.

Les opérations 18 et 22 fournissent respectivement les premières composantes de flux neutronique $\phi^0(j,g)^{(n)}$ et les secondes composantes de flux neutroniques $\phi^1(j,g)^{(n)}$. Les flux neutroniques $\phi(j,g)^{(n)}$ sont alors calculés comme somme des premières et secondes composantes par l'opération 24.

Dans le cas particulier, fréquent en pratique, où le nombre de groupes de vitesse est égal à deux (G = 2), et où il n'y a pas remontée des neutrons du groupe 2 (vitesses lentes) dans le groupe 1 (vitesses rapides) lors d'une diffusion, les flux neutroniques $\phi(j,g)^{(n)}$ pour les vitesses g = 1 et g = 2 peuvent être calculées plus rapidement, directement à partir des premières composantes de flux neutronique $\phi^0(j,g)^{(n)}$ par les expressions suivantes :

$$\phi^1(j,1)^{(n)} = a \cdot \phi^0(j,1)^{(n)}$$

$$\text{et } \phi^1(j,2)^{(n)} = b \cdot \phi^0(j,1)^{(n)} + c \cdot \phi^0(j,2)^{(n)}$$

$$\text{où} \quad a = 1 - \frac{\Sigma_a^1(j,1)^{(n)} + \Sigma_s^1(j,1 \rightarrow 2)^{(n)}}{\Sigma_a(j,1)^{(n)} + \Sigma_s(j,1 \rightarrow 2)^{(n)}}$$

$$b = \frac{1}{\Sigma_a(j,2)^{(n)}} \cdot \left[ \Sigma_s^1(j,1 \rightarrow 2)^{(n)} - \Sigma_s(j,1 \rightarrow 2)^{(n)} \cdot (1-a) \right]$$

$$\text{et} \quad c = 1 - \frac{\Sigma_a^1(j,2)^{(n)}}{\Sigma_a(j,2)^{(n)}}$$

$$\text{avec } \Sigma_a^1(j,g) = \Sigma_a(j,g)^{(n)} - \Sigma_a^0(j,g) \quad \text{pour } g=1,2$$

et $\Sigma_s^1(j,1 \rightarrow 2) = \Sigma_s(j,1 \rightarrow 2)^{(n)} - \Sigma_s^0(j,1 \rightarrow 2)$

Dans le cas particulier où G = 2, il n'est donc pas nécessaire de calculer explicitement les secondes composantes de flux neutroniques $\phi^1(j,g)^{(n)}$ ; l'opération 22 est donc supprimée.

La connaissance des flux neutroniques $\phi(j,g)^{(n)}$ permet d'évaluer les nouvelles valeurs $S(j)^{(n)}$ des sources. Dans un premier temps, on détermine par une opération 26 de nouvelles sources $NS(j)^{(n)}$ en fonction des flux neutroniques $\phi(j,g)^{(n)}$ et des sections efficaces de fission $\Sigma f(j,g)$, selon la relation :

$$NS(j)^{(n)} = \sum_{g=1}^{G} \nu \cdot \Sigma f(j,g)^{(n)} \cdot \phi(j,g)^{(n)}$$

où $\nu$ est le nombre moyen de nouveaux neutrons engendrés par une fission.

Dans un second temps, opération 28, on calcule une valeur actualisée des sources $S(j)$ par :

$$S(j)^{(n)} = \frac{NS(j)^{(n)}}{\displaystyle\sum_{j=1}^{J} NS(j)^{(n)}}$$

On en déduit, par l'opération 30, la valeur de la puissance dégagée par chaque maille j selon la relation :

$$P(j) = \frac{P}{\displaystyle\sum_{j=1}^{J} vj} \cdot \frac{S(j)^{(n)}}{\dfrac{1}{J}\displaystyle\sum_{j=1}^{J} S(j)^{(n)}}$$

On obtient donc, à la fin de l'opération 30, le flux neutronique $\phi(j,g)^{(n)}$, la source $S(j)^{(n)}$ et la puissance dégagée $P(j)^{(n)}$, pour chaque maille j ; $1 \le j \le J$.

Un test 32 est alors mis en oeuvre pour déterminer si il y a convergence des valeurs calculées ou si il est nécessaire de faire une nouvelle itération.

Le test peut s'appliquer par exemple aux sources $S(j)$ et au taux de multiplication des neutrons dans le coeur, ce taux étant défini par $\lambda^{(n)} = NS^{(n)}/S^{(n-1)}$.

Pour les sources $S(j)$, on compare, pour chaque maille j, l'accroissement relatif $|S(j)^{(n)} - S(j)^{(n-1)}/S(j)^{(n-1)}|$ à un facteur constant $\varepsilon$ ayant une valeur égale à $10^{-4}$ par exemple. De même, on compare l'accroissement du taux de multiplication $|(\lambda^{(n)} - \lambda^{(n-1)})/\lambda^{(n-1)}|$ à un facteur constant $\eta$ ayant une valeur égale à $10^{-5}$ par exemple.

Si les deux comparaisons indiquent qu'il y a convergence, le procédé se poursuit par l'opération 34 ; dans le cas contraire, on reprend l'opération 16 pour débuter une nouvelle itération.

S'il y a convergence, on affecte les valeurs $P(j)^{(n)}$ et $\phi(j,g)^{(n)}$ respectivement aux paramètres $P(j)$ et $\phi(j,g)$ selon l'opération 34.

Ces valeurs sont ensuite utilisées pour commander le coeur en agissant sur la position des barres de commande et/ou sur la concentration en bore. Plus précisément, les valeurs $P(j)$ et $\phi(j,g)$ permettent d'évaluer avec précision les limites physiques du coeur, et de les comparer, de manière classique, à des seuils respectant les critères de sûreté du réacteur. De cette comparaison découle une action sur les barres de commande et/ou la concentration en bore et/ou l'émission d'un signal d'alarme.

Dans la description qui précède, les sources de neutrons ne comprennent que les neutrons directement issus d'une fission. En pratique, on peut tenir compte en plus des sources composées par les neutrons retardés. Ceci ne modifie que légèrement les équations définissant les flux $\phi^0(h,g)$, $\phi^1(j,g)$ et les nouvelles sources $NS(j)$.

Le cas cinétique consiste donc à prendre en compte les sources $S_k^{PREC}$ liées aux précurseurs de neutrons retardés et le terme de variation de flux $\dfrac{1}{v} \cdot \dfrac{d\phi}{dt}$, où v est la vitesse moyenne des neutrons. Pour tenir compte des neutrons retardés, il est nécessaire d'introduire un indice temporel m, les calculs étant effectués de manière itérative (n étant l'indice d'itération) à chaque temps t égal à $t_0 + m \cdot \Delta t$.

La première composante de flux $\phi^0(j,g)^{(n,m)}$ est définie par

$$\phi^0(j,g)^{(n,m)} = \sum_{k}\left[ \psi g(j,k) \cdot S_k^{(n-1,m)} + \psi g^{PREC}(j,k) \cdot S_k^{PREC(n-1,m)} \right] \cdot v_k$$

où $\psi g_{(j,k)}^{PREC}$ représente le flux moyen dans la maille j, pour le groupe de vitesse g, associé à une source répartie uniformément dans la maille k et émettant un neutron par seconde suivant le spectre d'émission des neutrons retardés $\chi_g^{PREC}$.

La première composante de flux apparaît ainsi comme la somme de deux flux produits chacun par une source de neutrons particulière. Ces sources sont calculées par les équations suivantes :

$$S_k^{(n,m)} = (1-\beta) \sum_{g} \cdot \Sigma f(j,g) \cdot \phi(j,g)^{(n-1,m)}$$

où $\beta$ est le nombre total de neutrons retardés issus par neutron de fission, et

$$S_k^{PREC(n,m)} = \sum_{i=1}^{I} \lambda_i . Ci(j)^{(n,m)}$$

où $\lambda_i$ est la constante de décroissance radioactive du précurseur et $Ci(j)^{(n,m)}$ est la concentration du précurseur i dans la maille j à l'instant $t_0 + m. \Delta t$ et à l'itération n.

La seconde composante de flux neutronique $\phi^1(j,g)^{(n,m)}$ s'obtient comme dans la description précédente par résolution d'un système linéaire :

$$- \left\{ \left[ \Sigma t(j,g)^{(n,m)} + \frac{1}{v_g . \Delta t} \right] . \phi^{1(n,m)}(j,g) + \sum_{g'} \Sigma s(j,g' \rightarrow g) . \phi^1(j,g')^{(n,m)} \right.$$

$$- \left[ \Sigma^1 t(j,g)^{(n,m)} + \frac{1}{v_g . \Delta t} \right] . \phi^{0(n,m)}(j,g) + \sum_{g'} \Sigma^1 s(j,g' \rightarrow g)^{(n,m)} . \phi^0(j,g')^{(n,m)}$$

$$+ \frac{1}{v_g . t} . \phi^{(m-1)}(j,g) = 0,$$

où $\phi(j,g)^{(m-1)}$ est le flux neutronique obtenu à l'itération temporelle $m - 1$ et $v_g$ est la vitesse moyenne des neutrons du groupe de vitesse g.

Enfin, les nouvelles sources $Nw(j)^{(n,m)}$ sont définies par

$$NS(j)^{(n,m)} = (1-\beta) \sum_g \nu . \Sigma f(j,g)^{(n,m)} . \phi(j,g)^{(n,m)}$$

## Revendications

1. Procédé de contrôle d'un réacteur nucléaire comprenant un coeur contenant des assemblages de matériaux fissiles, la fission des noyaux desdits matériaux étant provoquée par des interactions avec des neutrons et engendrant à son tour des neutrons, ledit réacteur nucléaire comprenant en outre un moyen de régulation du flux neutronique dans le coeur dudit réacteur et de la puissance dégagée par le coeur dudit réacteur, ledit moyen de régulation comprenant au moins un assemblage de barres de commande déplaçables dans le coeur dudit réacteur, ledit procédé étant caractérisé en ce que :

A) — on détermine, de manière itérative, les flux neutroniques $\phi(j,g)$, pour chaque zone ou maille j, $1 \le j \le J$, d'un ensemble de mailles correspondant au volume du coeur du réacteur et pour chaque groupe de vitesse g, $1 \le g \le G$, d'un ensemble de groupes de vitesses pour les neutrons ; et les nombres de neutrons, ou sources, $S(j)$ émis par chaque maille j, $1 \le j \le J$, par unité de volume et de temps, la détermination desdites valeurs consistant à répéter la suite d'opérations suivantes jusqu'à la convergence desdites valeurs:

a) calcul de premières composantes de flux neutronique $\phi^0(j,g)$, $1 \le j \le J$, en fonction de matrices de couplage prédéterminées $[\psi g]$, $1 \le g \le G$, et des sources $S(j)$, chaque élément $\psi g(j,k)$, $1 \le k \le K$ et $1 \le l \le J$, exprimant pour des neutrons du groupe de vitesse g, $1 \le g \le G$, le couplage entre la maille j et les mailles voisines k correspondant à des probabilités d'interaction prédéterminées des neutrons avec les matériaux fissiles du coeur, pour chaque maille j, $1 \le j \le J$,

b) calcul des probabilités d'interaction réelles des neutrons dans le coeur en fonction des paramètres physiques décrivant l'état du coeur,

c) calcul de secondes composantes de flux neutronique $\phi^1(j,g)$, $1 \le j \le J$, en fonction des flux neutroniques $\phi^0(j,g)$ des probabilités d'interaction prédéterminées des neutrons dans le coeur et des probabilités d'interaction réelles des neutrons dans le coeur,

d) calcul des flux neutroniques $\phi(j,g)$ dans chaque maille j comme somme des premières et secondes composantes de flux neutronique,

e) calcul de nouvelles sources NS(j), $1 \leq j \leq J$, associées à chaque flux neutronique $\phi(j,g)$, et des nouvelles valeurs des sources S(j) par la relation :

$$S(j) = \frac{NS(j)}{\displaystyle\sum_{j=1}^{J} NS(j)}$$

f) calcul des puissances P(j) émises dans chaque maille j en fonction de la puissance totale P émise et des sources S(j),

B) — on commande le moyen de régulation en fonction des flux neutroniques $\phi(j,g)$ et des puissances P(j).

2. Procédé selon la revendication 1, caractérisé en ce que la répartition des neutrons dans le coeur est définie par l'ensemble des paramètres suivants, pour chaque maille j, $1 \leq j \leq J$ :

— section efficaces macroscopiques de diffusion $\Sigma s(j,g\ g')$ des neutrons du groupe de vitesse g, $1 \leq g \leq G$, dans le groupe de vitesse g', $g' \neq g$

— section efficace mascroscopique d'absorption $\Sigma a(j,g)$ des neutrons du groupe de vitesse g, $1 \leq g \leq G$,

— section efficace macroscopique de fission $\Sigma f(j,g)$ des neutrons du groupe de vitesse g, $1 \leq g \leq G$.

3. Procédé selon la revendication 2, caractérisé en ce que les probabilités d'interaction prédéterminées des neutrons dans le coeur peuvent être définies pour chaque maille j, $1 \leq j \leq J$, et chaque groupe de vitesse g, $1 \leq g \leq G$, par :

— des sections efficaces macroscopiques de diffusion $\Sigma_s^0(j,g\ g')$ dont les valeurs sont des valeurs possibles pour ledit coeur,

— une section efficace macroscopique d'absorption $\Sigma_a^0(j,g)$ dont la valeur est une valeur possible pour ledit coeur,

— une section efficace macroscopique de fission $\Sigma_f^0(j,g)$ de valeur égale à zéro.

4. Procédé selon la revendication 3, caractérisé en ce que pour chaque maille j, $1 \leq j \leq J$, l'ensemble des secondes composantes de flux neutronique $\phi^1(j,g)$, $1 \leq g \leq G$ est déterminé comme solution du système à G équations linéaires :

$$- \Sigma t(j,g) \cdot \phi^1(j,g) + \sum_{g=1}^{G} \Sigma s(j,g \to g') \cdot \phi^1(j,g) =$$

$$\Sigma t^1(j,g) \cdot \phi^0(j,g) - \sum_{g'=1}^{G} \Sigma s^1(j,g' \to g) \cdot \phi^0(j,g').$$

$$\text{où} \quad \Sigma t(j,g) = \Sigma a(j,g) + \sum_{g'=1}^{G} \Sigma s(j,g \to g'),$$

$$\Sigma t^1(j,g) = \Sigma t(j,g) - \left[ \Sigma a^0(j,g) + \sum_{g'=1}^{G} \Sigma s^{\cdot 0}(j,g \to g') \right]$$

$$\text{et} \quad \Sigma s^1(j,g \; g') = \Sigma s(j,g \to g') - \Sigma s^0(j,g \to g').$$

5. Procédé selon l'une quelconque des revendications 1 à 4, caractérisé en ce que les premières composantes $\phi^0(j,g)$ sont calculées selon les relations :

$$\phi^0(j,g) = \sum_{k=1}^{K} \phi g(j,k) \cdot S(j) \cdot v(j)$$

où $v(j)$ est le volume de la maille j.

6. Procédé selon l'une quelconque des revendications 1 à 5, caractérisé en ce que les nouvelles sources $NS(j)$ sont calculées selon les relations :

$$NS(j) = \nu \cdot \sum_{g=1}^{G} \Sigma f(j,g) \cdot \phi(j,g)$$

où $\nu$ est le nombre moyen de nouveaux neutrons engendrés par une fission.

7. Procédé selon la revendication 3, dans lequel $G = 2$, caractérisé en ce que les flux neutroniques $\phi(j,1)$ et $\phi(j,2)$ pour chaque maille j, $1 \leq j \leq J$ sont calculés suivant les relations :

$$\phi(j,1) = \left[1 - \frac{\Sigma\overset{1}{a}(j,1) + \Sigma\overset{1}{s}(j,1\to 2)}{\Sigma a(j,1) + \Sigma s(j,1\to 2)}\right].\phi^0(j,1)$$

$$\text{et } \phi(j,2) = b . \phi^0(j,1) + c . \phi^0(j,2)$$

$$\text{où } b = \frac{1}{\Sigma a(j,2)}\left[\Sigma\overset{1}{s}(j,1\to 2) - \Sigma s(j,1\to 2) . \frac{\Sigma\overset{1}{a}(j,1)+\Sigma\overset{1}{s}(j,1\to 2)}{\Sigma a(j,1)+\Sigma s(j,1\to 2)}\right]$$

$$c = 1 - \frac{\Sigma\overset{1}{a}(j,2)}{\Sigma a(j,2)}$$

8. Procédé selon la revendication 7, caractérisé en ce que, en outre, les nouvelles sources NS(j) sont calculées selon la relation :

$$NS(j) = \nu \cdot \Sigma f(j,1) \cdot \phi(j,1) + \nu \cdot \Sigma f(j,2) \cdot \phi(j,2)$$

où $\nu$ est le nombre moyen de nouveaux neutrons engendrés par une fission.

9. Procédé selon la revendication 3, caractérisé en ce que pour chaque maille j, $1 \le j \le J$, l'ensemble des secondes composantes de flux neutronique $\phi^1(j,g)^{(m)}$, $1 \le g \le G$, est déterminé de manière itérative, les valeurs $\phi^1(j,g)^{(n,m)}$ obtenues à la $n^{\text{ième}}$ itération étant calculées comme solution du système à G équation linéaires :

$$-\left[\Sigma t(j,g)^{(n,m)} + \frac{1}{v_g \cdot \Delta t}\right].\phi^{1(n,m)}(j,g) + \sum_{g'}\Sigma s(j,g'\to g)^{(n,m)}.\phi^1(j,g)^{(n,m)}$$

$$-\left[\Sigma\overset{1}{t}(j,g)^{(n,m)} + \frac{1}{v_g \cdot \Delta t}\right].\phi^{0(n,m)}(j,g) + \sum_{g'}\Sigma\overset{1}{s}(j,g'\to g)^{(n,m)} .\phi^0(j,g')^{(n,m)}$$

$$+ \frac{1}{v_g \cdot \Delta t} .\phi^{(m-1)}(j,g) = 0,$$

où m est un indice temporel, les flux neutroniques étant calculés à des instants $t = t_0 + m. \Delta t$ ; n est l'indice d'itération pour le calcul des flux neutroniques à chaque instant t ; $\phi(j,g)^{(m-1)}$ est le flux neutronique obtenu à l'itération temporelle m − 1 ; et $v_g$ est la vitesse moyenne des neutrons du groupe de vitesse g.

10. Procédé selon l'une quelconque des revendications 1, 2, 3 ou 9, caractérisé en ce que les premières composantes de flux neutronique $\phi^0(j,g)$ sont calculées en fonction de matrices de couplage prédéterminées $[\psi_g^{PREC}]$ pour les neutrons retardés, dont chaque élément $\psi_{g(j,k)}^{PREC}$ représente le flux moyen dans la maille j, pour le groupe de vitesse g, associé à une source répartie uniformément dans la maille k et émettant un neutron par seconde suivant un spectre d'émission de neutrons retardés $\chi_g^{PREC}$.

11. Procédé selon la revendication 10, caractérisé en ce qu'on calcule les premières composantes de flux neutronique selon l'équation :

$$\phi^0(j,g)^{(n,m)} = \sum_k \left[ \psi g(j,k).S_k^{(n-1,m)} + \psi g(j,k).S_k^{PREC\ PREC(n-1,m)} \right].v_k$$

où m est un indice temporel, les flux neutroniques étant calculés à des instants $t = t_0 + m. \Delta t$ ; n est l'indice d'itération pour le calcul des flux neutroniques à chaque instant t ; et $s_k^{PREC}$ est la source, dans la maille k, liée aux précurseurs de neutrons retardés.

12. Procédé selon la revendication 11, caractérisé en ce que les sources

$$S_k^{(n,m)} \quad et \quad S_k^{PREC(n,m)}$$

sont calculées suivant les équations :

$$S_k^{(n,m)} = (1-\beta) \sum_g \nu. \ \Sigma f(j,g).\phi(j,g)^{(n-1,m)}$$

où β est le nombre total de neutrons retardés issus par neutron de fission, et

$$S_k^{PREC(n,m)} = \sum_{i=1}^{I} \lambda i.Ci(j)^{(n,m)}$$

où λi est la constante de décroissance radioactive du précurseur et $Ci(j)^{(n,m)}$ est la concentration du précurseur i dans la maille j à l'instant $t_0 + m. \Delta t$ et à l'itération n.

13. Procédé selon la revendication 12, caractérisé en ce que les nouvelles sources sont calculées suivant l'équation :

$$NS(j)^{(n,m)} = (1-\beta) \sum_g \nu. \ \Sigma f(j,g)^{(n,m)}.\phi(j,g)^{(n,m)}$$

14. Procédé selon l'une quelconque des revendications 1 à 13, caractérisé en ce que, dans le calcul itératif des flux neutroniques $\phi(j,g)$ et des sources S(j), on initialise lesdits flux neutroniques à la valeur zéro et lesdites sources à une valeur constante non nulle.

15. Procédé selon l'une quelconque des revendication 1 à 14, caractérisé en ce que dans le calcul itératif à un instant t des flux neutroniques $\phi(j,g)$ et des sources S(j), on initialise lesdits flux neutroniques et lesdites sources avec les valeurs obtenues par ledit procédé à un instant précédent $t - 1$.

## Patentansprüche

1. Verfahren zum Steuern eines Kernreaktors, der einen Kern aufweist, der Verbände spaltbaren Materials enthält, wobei die Kernspaltung der Materialien durch Wechselwirkungen mit Neutronen hervorgerufen wird und ihrerseits Neutronen erzeugt, welcher Kernreaktor weiterhin eine Regeleinrichtung für den Neutronenfluß im Kern des Reaktors und der von dem Kern des Reaktors abgegebenen Leistung aufweist, welche Regeleinrichtung wenigstens eine Gruppe aus in dem Kern des Reaktors verstellbaren Steuerstäben enthält, gekennzeichnet durch die folgenden Merkmale :

A) man bestimmt auf iterativem Wege den Neutronenfluß $\phi(j,g)$ für jede Zone oder Masche j, $1 \leq j \leq J$ einer

Gruppe von Maschen entsprechend dem Volumen des Kerns des Reaktors und für jede Geschwindigkeits-gruppe g, $1 \le g \le G$ eines Satzes von Geschwindigkeitsgruppen für die Neutronen ; und die Anzahlen der Neutronen oder Quellen S (j), die von jeder Masche j, $1 \le j \le J$ pro Volumen- und Zeiteinheit abgegeben werden, wobei die Bestimmung dieser Werte darin besteht, den Ablauf der folgenden Operationen bis zur Konvergenz dieser Werte zu wiederholen :

a) Berechnung der ersten Komponenten des Neutronenflusses $\phi^0$ (j,g), $1 \le j \le J$, in Abhängigkeit von vorbestimmten Kopplungsmatrizen $[\phi g]$, $1 \le g \le G$ und der Quellen S(j), wobei jedes Element $\phi g(j,k)$, $1 \le k \le K$ und $1 \le l \le J$ für die Neutronen der Geschwindigkeitsgruppe g, $1 \le g \le G$ die Kopplung zwischen der Masche j und den benachbarten Maschen k entsprechend vorbestimmten Wechselwirkungswahrscheinlichkeiten von Neutronen mit den spaltbaren Materialien des Kerns für jede Masche j, $1 \le j \le J$ ausdrückt,

b) Berechnung der reellen Wechselwirkungswahrscheinlichkeiten der Neutronen im Kern in Abhängigkeit von physikalischen Parametern, die den Zustand des Kerns beschreiben,

c) Berechnung zweiter Komponenten des Neutronenflusses $\phi^1$(j,g), $1 \le j \le J$ in Abhängigkeit von Neu-tronenflüssen $\phi^0$/j,g) der vorbestimmten Wechselwirkungswahrscheinlichkeiten von Neutronen im Kern und von reellen Wechselwirkungswahrscheinlichkeiten der Neutronen im Kern,

d) Berechnung der Neutronenflüsse $\phi$(j,g) in jeder Masche j als Summe der ersten und zweiten Komponenten des Neutronenflusses,

e) Berechnung neuer Quellen NS(j), $1 \le j \le J$, die jedem Neutronenfluß $\phi$(j,g) zugeordnet sind, und neuer Werte der Quellen S(j) durch die Beziehung :

$$S(j) = \frac{NS(j)}{\displaystyle\sum_{j=1}^{J} NS(j)}$$

f) Berechnung der fristungen P(j), die von jeder Masche j abgegeben werden, in Abhängigkeit von der Gesamtleistung P, die von den Quellen S(j) abgegeben wird,

B) man steuert die Regeleinrichtung in Abhängigkeit von den Neutronenflüssen $\phi$(j,g) und den Leistungen P(j).

2. Verfahren nach Anspruch 1, dadurch gekennzeichnet, daß die Verteilung der Neutronen im Kern durch die Gesamtheit der nachfolgenden Parameter für jede Masche j, $1 \le j \le J$ definiert ist :

makroskopische wirksame Verteilungsquerschnitte s(j,g g') der Neutronen der Geschwindigeitsgruppe g, $1 \le g \le G$ in der Geschwindigkeitsgruppe g', $g' \ne g$

wirksamer makroskopischer Absorptionsquerschnitt $\Sigma$ a(j,g) der Neutronen der Geschwindigkeitsgruppe g, $1 \le g \le G$,

wirksamer makroskopischer Spaltungquerschntit $\Sigma$ f(j,g) der Neutronen der Geschwindigkeitsgruppe g, $1 \le g \le G$

3. Verfahren nach Anspruch 2, dadurch gekennzeichnet, daß die vorbestimmten Wechselwirkungswahrscheinlichkeiten der Neutronen im Kern für jede Masche j, $1 \le j \le J$ und für jede Geschwindigkeitsgruppe g, $1 \le g \le G$ vorbestimmt werden können durch :

die makroskopischen wirksamen Diffusionsanteile $\Sigma^0_i$(j,g g'), deren Werte mögliche Werte für den Kern sind,

wirksamer makroskopischer Absorptionsanteil $\Sigma^0_a$(j,g), dessen Wert ein möglicher Wert für den Kern ist,

wirksamer makroskopischer Spaltungsanteil $\Sigma^0_i$(j,g) des Wertes gleich Null.

4. Verfahren nach Anspruch 3, dadurch gekennzeichnet, für jede Masche j, $1 \le j \le J$ die Gesamtheit der zweiten Komponenten des Neutronenflusses $\phi$(j,g), $1 \le g \le G$ als Lösung des G-Systems linearer Gleichungen bestimmt ist :

$$- \Sigma t(j,g) \cdot \phi^1(j,g) + \sum_{g=1}^{6} \Sigma s(j,g \rightarrow g') \cdot \phi^1(j,g) =$$

$$\Sigma t^1(j,g) \cdot \phi^0(j,g) - \sum_{g'=1}^{6} \Sigma s^1(j,g' \rightarrow g) \cdot \phi^0(j,g').$$

$$wobei: \quad \Sigma t(j,g) = \Sigma a(j,g) + \sum_{g'=1}^{6} \Sigma s(j,g \rightarrow g'),$$

$$\Sigma t^1(j,g) = \Sigma t(j,g) - \left[ \Sigma s^0(j,g) + \sum_{g'=1}^{6} \Sigma s^0(j,g \rightarrow g') \right]$$

$$und \quad \Sigma s^1(j,g \quad g') = \Sigma s(j,g \rightarrow g') - \Sigma s^0(j,g \rightarrow g').$$

5. Verfahren nach einem der Ansprüche 1 bis 4, dadurch gekennzeichnet, daß die ersten Komponenten $\phi^0(j,g)$ gemäß den Beziehungen berechnet werden :

$$\phi^0(j,g) = \sum_{k=1}^{K} \phi_g(j,k) \cdot S(j) \cdot v(j)$$

wobei v(j) das Volumen der Masche j ist.

6. Verfahren nach einem der Ansprüche 1 bis 5, dadurch gekennzeichnet, daß die neuen Quellen NS(j) gemäß den Beziehungen berechnet werden :

$$NS(j) = \nu \cdot \sum_{g=1}^{6} \Sigma f(j,g) \cdot \phi(j,g)$$

wobei ν die mittlere Anzahl neuer Elektronen ist, durch eine Spaltung erzeugt wird.

7. Verfahren nach Anspruch 3, bei dem G = 2 ist, dadurch gekennzeichnet, daß die Neutronenflüsse $\phi(j,1)$ und $\phi(j,2)$ für jede Masche j, $1 \leq j \leq J$ gemäß den vorliegenden Beziehungen berechnet werden :

$$\phi(j,1) = \left[1 - \frac{\Sigma_a^1(j,1) + \Sigma_s^1(j,1\to 2)}{\Sigma_a(j,1) + \Sigma_s(j,1\to 2)}\right] \cdot \phi^0(j,1)$$

UND
$$\phi(j,2) = b \cdot \phi^0(j,1) + c \cdot \phi^0(j,2)$$

ODER
$$b = \frac{1}{\Sigma_a(j,2)}\left[\Sigma_s^1(j,1\to 2) - \Sigma_s(j,1\to 2) \cdot \frac{\Sigma_a^1(j,1) + \Sigma_s^1(j,1\to 2)}{\Sigma_a(j,1) + \Sigma_s(j,1\to 2)}\right]$$

$$c = 1 - \frac{\Sigma_a^1(j,2)}{\Sigma_a(j,2)}$$

8. Verfahren nach Anspruch 7, dadurch gekennzeichnet, daß weiterhin die neuen Quellen NS(j) gemäß der Beziehung berechnet werden :

$$NS(j) = \nu \cdot \Sigma_f(j,1) \cdot \phi(j,1) + \nu \cdot \Sigma_f(j,2) \cdot \phi(j,2)$$

wobei $\nu$ die mittlere Anzahl neuer Elektronen ist, die von einer Spaltung erzeugt werden.

9. Verfahren nach Anspruch 3, dadurch gekennzeichnet, daß für jede Masche j, $1 \le j \le J$ die Gesamtzahl der zweiten Komponenten des Elektronenflusses $^1(j,g)^{(m)}$, $1 \le g \le G$ auf iterativem Wege bestimmt wird, wobei die werte $\phi^1(j,g)^{(n,\,m)}$, die bei der n-ten Iteration erhalten werden, als Lösung des G-Systems linearer Gleichungen berechnet werden :

$$-\left[\Sigma_t(j,g)^{(n,m)} + \frac{1}{v_g \cdot \Delta t}\right] \cdot \phi^{1(n,m)}(j,g) + \sum_{g'}\Sigma_s(j,g'\to g)^{(n,m)} \cdot \phi^1(j,g)^{(n,m)}$$

$$-\left[\Sigma_t^1(j,g)^{(n,m)} + \frac{1}{v_g \cdot \Delta t}\right] \cdot \phi^{0(n,m)}(j,g) + \sum_{g'}\Sigma_s^1(j,g'\to g)^{(n,m)} \cdot \phi^0(j,g)^{(n,m)}$$

$$+ \frac{1}{v_g \cdot \Delta t} \cdot \phi^{(m-1)}(j,g) = 0,$$

wobei m ein zeitlicher Index ist und die Neutronenflüsse zu Zeitpunkten $t = t_0 + m\times\Delta t$ berechnet werden ; n der Iterationsindex für die Berechnung der Neutronenflüsse zu jedem Zeitpunkt t ist ; $\phi(j,g)^{(m-1)}$ der Neutronenfluß ist, der bei der zeitlichen Iteration m − 1 erhalten wird ; und $v_g$ die mittlere Geschwindigkeit der Neutronen der Geschwindigkeitsgruppe g ist.

10. Verfahren nach einem der Ansprüche 1, 2, 3 oder 9, dadurch gekennzeichnet, daß die ersten Komponenten des Elektronenflusses $\phi^0(j,g)$ in Abhängigkeit von vorbestimmten Kopplungsmatrizen $[\phi g^{PREC}]$ für die verzögerten Neutronen berechnet werden, von denen jedes Element $\phi g^{PREC}_{(j,k)}$ den mittleren Fluß in der Masche j für die Geschwindigkeitsgruppe g repräsentiert, die einer gleichmäßig in der Masche k verteilten Quelle zugeordnet ist und ein Neutron pro Sekunde im Anschluß an ein Emissionsspektrum verzögerter Neutronen

18

$\chi_g^{PREC}$ abgibt.

11. Verfahren nach Anspruch 10, dadurch gekennzeichnet, daß man die ersten Komponenten des Neutronenflusses nach der folgenden Gleichung berechnet:

$$\phi^0(j,g)^{(n,m)} = \sum_k \left[ \phi g(j,k).s_k^{(n-1,m)} + \phi g^{PREC}(j,k).s_k^{PREC(n-1,m)} \right].v_k$$

wobei m ein zeitlicher Index ist, die Neutronenflüsse zu den Zeitpunkten $t-t_0 + m\Delta t$ berechnet werden; n der Iterationsindex für die Berechnung der Neutronenflüsse zu jedem Zeitpunkt t ist; und $S_k^{PREC}$ die Quelle in der Masche k ist, die mit den Vorläufern der verzögerten Neutronen verbunden ist.

12. Verfahren nach Anspruch 11, dadurch gekennzeichnet, daß die Quellen $S_k^{(n,m)}$ und $S_k^{PREC}$ nach den folgenden Gleichungen berechnet werden:

$$S_k^{(n,m)} = (1-\beta) \sum_g \nu. \Sigma f(j,g).\phi(j,g)^{(n-1,m)}$$

wobei β die Gesamtzahl verzögerter Neutronen ist, die pro Spaltungsneutronen abgegeben werden, und

$$S_k^{PREC(n,m)} = \sum_{i=1}^{1} \lambda i.Ci(j)^{(n,m)}$$

wobei $\lambda$ i die radioaktive Zerfallskonstante des Vorläufers ist und $Ci(j)^{(n,m)}$ die Vorläuferkonzentration i in der Masche j zum Zeitpunkt $t_0 + mx\Delta t$ und bei der Iteration n ist.

13. Verfahren nach Anspruch 12, dadurch gekennzeichnet, daß die neuen Quellen nach der folgenden Gleichung berechnet werden:

$$NS(j)^{(n,m)} = (1-\beta) \sum_g \nu. \Sigma f(j,g)^{(n,m)}.\phi(j,g)^{(n,m)}$$

14. Verfahren nach einem der Anspruche 1 bis 13, dadurch gekennzeichnet, daß bei der interativen Berechnung der Neutronenflüsse $Q(j,g)$ und der Quellen $S(j)$ man die Neutronenflüsse bei dem Wert Null und die Quellen bei einem von Null verschiedenen konstanten Wert initialisiert.

15. Verfahren nach einem der Anspruche 1 bis 13, dadurch gekennzeichnet, daß bei der iterativen Berechnung bei einem Augenblick t der Neutronenflüsse $\phi(j,g)$ und der Quellen $S(j)$ man die Neutronenflüsse und die Quellen mit den Werten intialisiert, die man für das genannte Verfahren zum vorangehenden Zeitpunkt $t-1$ erhalten.

## Claims

1. Process for the control of a nuclear reactor having a core containing fissile material assemblies, the fission of the nuclei of said materials being brought about by interactions with neutrons and producing in turn neutrons, said nuclear reactor also having a means for regulating the neutron flux in the reactor core and the power given off by said reactor core, said regulating means comprising at least one assembly of control rods displaceable in said reactor core, said process being characterized in that:

A) iteratively there is a determination of the neutron fluxes $\phi(j,g)$ for each zone or mesh j $1 \le j \le J$ of a group of meshes corresponding to the volume of the reactor core and for each velocity group g $1 \le g \le G$ of a plurality of velocity groups for the neutrons; and the numbers of neutrons or sources $S(j)$ emitted by each mesh j, $1 \le j \le J$, per volume and time unit, the determination of said values consisting of repeating the following sequence of operations until said values converge :

a) calculation of the first components of the neutron flux $\phi^0(j,g)$, $1 \leq j \leq J$ as a function of the predetermined coupling matrixes $[\psi g)$ $1 \leq g \leq G$ and sources S(j), each element $\psi g(j,k)$, $1 \leq k \leq K$ and $1 \leq l \leq J$ expressing for neutrons of the velocity group g $1 \leq g \leq G$, the coupling between the mesh j and the adjacent meshes k corresponding to predetermined interaction probabilities of the neutrons with the fissile materials of the core for each mesh j, $1 \leq j \leq J$,

b) calculation of the real interaction probabilities of the neutrons in the core as a function of physical parameters describing the state of the core,

c) calculation of second neutron flux components $\phi^1(j,g)$, $1 \leq j \leq J$ as a function of the neutron fluxes $\phi^0(j,g)$ of the predetermined interaction probabilities of the neutrons in the core and the real interaction probabilities of the neutrons in the core,

d) calculation of the neutron fluxes $\phi(j,g)$ in each mesh j, as the sum of the first and second neutron flux components,

e) calculation of the new sources NS(j), $1 \leq j \leq J$ associated with each neutron flux $\phi(j,g)$ and new values of sources S(j) by the relation :

$$S(j) = \frac{NS(j)}{\sum_{j=1}^{J} NS(j)}$$

f) calculation of the powers P(j) emitted in each mesh j as a function of the total power P emitted and the sources S(j),

B) the regulating means is controlled as a function of the neutron fluxes $\phi(j,g)$ and powers P(j).

2. Process according to claim 1, wherein the distribution of neutrons in the core is defined by all the following parameters for each mesh j, $1 \leq j \leq J$ :

effective macroscopic diffusion section $\Sigma s(j,g\ g')$ of the neutrons of the velocity group g, $1 \leq g \leq G$ in the velocity group g', $g' \neq g$,

effective macroscopic absorption section $\Sigma a(j,g)$ of the neutrons of velocity group g, $1 \leq g \leq G$,

effective macroscopic fission section $\Sigma f(j,g)$ of the neutrons of velocity group g, $1 \leq g \leq G$.

3. Process according to claim 1, wherein the predetermined interaction probabilities of the neutrons in the core can be defined for each mesh j, $1 \leq j \leq J$ and each velocity group g, $1 \leq g \leq G$ by :

effective macroscopic diffusion sections $\Sigma_s^o(j,g\ g')$, whose values are the possible values for said core,

an effective macroscopic absorption section $\Sigma_a^o(j,g)$, whose value is a possible value for said core,

an effective macroscopic fission section $\Sigma_f^o(j,g)$ of value equal to zero.

4. Process according to claim 3, characterized in that for each mesh j $1 \leq j \leq J$ all the second neutron flux components $\phi^1(j,g)$, $1 \leq g \leq G$ is determined as the solution of the system with G linear equations :

$$-\varepsilon t(j,g) \cdot \Phi^1(j,g) + \sum_{g=1}^{G} \varepsilon s(j,g \to g') \cdot \Phi^1(j,g) =$$

$$\varepsilon t(j,g) \cdot \Phi^0(j,g) - \sum_{g'=1}^{G} \overset{1}{\varepsilon s}(j,g' \to g) \cdot \Phi^0(j,g').$$

in which

$$\varepsilon t(j,g) = \varepsilon a(j,g) + \sum_{g'=1}^{G} \varepsilon s(j,g \to g'),$$

$$\overset{1}{\varepsilon t}(j,g) = \varepsilon t(j,g) - \left[ \overset{0}{\varepsilon a}(j,g) + \sum_{g'=1}^{G} \overset{0}{\varepsilon s}(j,g \to g') \right]$$

and

$$\overset{1}{\varepsilon s}(j,g\ g') = \varepsilon s(j,g \to g') - \overset{0}{\varepsilon s}(j,g \to g').$$

5. Process according to any one of the claims 1 to 4, characterized in that the first component $\phi^0(j,g)$ are calculated in accordance with the relations :

$$\Phi^0(j,g) = \sum_{k=1}^{K} \psi g(j,k) \cdot S(j) \cdot v(j)$$

in which v(j) is the volume of the mesh j.

6. Process according to any one of the claims 1 to 5, characterized in that the new sources NS(j) are calculated in accordance with the relations :

$$NS(j) = \gamma \cdot \sum_{g=1}^{G} \varepsilon f(j,g) \cdot \Phi(j,g)$$

in which $v$ is the average number of new neutrons produced per fission.

7. Process according to claim 3, wherein G = 2, characterized in that the neutron fluxes $\phi(j,1)$ and $\phi(j,2)$ for each mesh j, $1 \leq j \leq J$ being calculated according to the relations :

$$\Phi(j,1) = \left[ 1 - \frac{\overset{1}{\varepsilon a}(j,1) + \overset{1}{\varepsilon s}(j,1 \to 2)}{\varepsilon a(j,1) + \varepsilon s(j,1 \to 2)} \right] \cdot \Phi^0(j,1)$$

and

$$\Phi(j,2) = b \cdot \Phi^0(j,1) + c \cdot \Phi^0(j,2)$$

in which

$$b = \frac{1}{\varepsilon a(j,2)} \left[ \overset{1}{\varepsilon s}(j,1 \to 2) - \varepsilon s(j,1 \to 2) \cdot \frac{\overset{1}{\varepsilon a}(j,1) + \overset{1}{\varepsilon s}(j,1 \to 2)}{\varepsilon a(j,1) + \varepsilon s(j,1 \to 2)} \right]$$

$$c = 1 - \frac{\overset{1}{\varepsilon a}(j,2)}{\varepsilon a(j,2)}$$

8. Process according to claim 7, characterized in that the new sources NS(j) are calculated according to the equation :

$$NS(j) = \nu \cdot \Sigma f(j,1) \cdot \phi(j,1) + \nu \cdot \Sigma f(j,2) \cdot \phi(j,2)$$

in which $\nu$ is the average number of new neutrons produced per fission.

9. Process according to claim 3, characterized in that for each mesh $j$ $1 \le j \le J$, all the second neutron flux components $\phi^1(j,g)^{(m)}$ $1 \le g \le G$ is determined iteratively, the values $\phi^1(j,g)^{(n,m)}$ obtained at the nth iteration being calculated as the solution of the system with G linear equations :

$$- \left[ \epsilon t(j,g)^{(n,m)} + \frac{1}{vg \cdot \Delta t} \cdot \Phi(j,g)^{1(n,m)} + \sum_{g'} \epsilon s(j,g' \to g)^{(n,m)} \cdot \Phi(j,g)^{1(n,m)} \right.$$

$$- \left[ \epsilon t(j,g)^{1(n,m)} + \frac{1}{vg \cdot \Delta t} \cdot \Phi(j,g)^{0(n,m)} + \sum_{g'} \epsilon s(j,g' \to g)^{1(n,m)} \cdot \Phi(j,g')^{0(n,m)} \right.$$

$$+ \frac{1}{vg \cdot \Delta t} \cdot \Phi(j,g)^{(m-1)} = 0,$$

in which m is a time index, the neutron fluxes being calculated at instants $t = to + m \cdot \Delta t$, n is the iteration index for the calculation of the neutron fluxes at each instant t, $\phi(j,g)^{(m-1)}$ is the neutron flux obtained at the time iteration $m - 1$ and $v_g$ is the average velocity of the neutrons of the velocity group g.

10. Process according to any one of the claims 1, 2 3 or 9, characterized in that the first neutron flux components $\phi(j,g)$ are calculated as a function of predetermined coupling matrixes $[\psi^{PREC}_g]$ for the delayed neutrons, whereof each element $\psi^{PREC}_{g(j,k)}$ represents the mean flux in the mesh j, for the velocity group g associated with a source uniformly distributed in mesh k and emitting one neutron per second in accordance with a delayed neutron emission spectrum $\chi^{PREC}_g$.

11. Process according to claim 10, characterized in that the first neutron flux components are calculated in accordance with the equation :

$$\Phi(j,g)^{0(n,m)} = \sum_{k} \left[ \psi_g(j,k) \cdot S_k^{(n-1,m)} + \psi_g^{PREC}(j,k) \cdot S_k^{PREC(n-1,m)} \right] \cdot v_k$$

in which m is a time index, the neutron fluxes being calculated at instants $t = to + m \cdot \Delta t$, n is the iteration index for the calculation of the neutron fluxes at each instant t and $S^{PREC}_k$ is the source, in mesh k, linked with delayed neutron precursors.

12. Process according to claim 11, characterized in that the sources $S_k^{(n,m)}$ and $S_k^{PREC(n,m)}$ are calculated in accordance with the equations :

$$S_k^{(n,m)} = (1-\beta) \sum_{g} \gamma \cdot \epsilon f(j,g) \cdot \Phi(j,g)^{(n-1,m)}$$

in which $\beta$ is the total number of delayed neutrons per fission neutron and

$$S_k^{PREC(n,m)} = \sum_{i=1} \lambda i \cdot Ci(j)^{(n,m)}$$

in which $\lambda i$ is the radioactive decay constant of the precursor and $Ci(j)^{(n,m)}$ is the concentration of the precursor i in mesh j at instant to + m · Δt and at iteration n.

13. Process according to claim 12, characterized in that the new sources are calculated in accordance with equation :

$$NS(j)^{(n,m)} = (1-\beta) \sum_g \gamma \cdot \epsilon f(j,g)^{(n,m)} \cdot \Phi(j,g)^{(n,m)}$$

14. Process according to any one of the claims 1 to 13, characterized in that the neutron fluxes $\phi(j,g)$ and sources S(j) being iteratively calculated, said neutron fluxes are initialized to the value zero and said sources to a constant non-zero value

15. Process according to any one of the claims 1 to 14, characterized in that the neutron fluxes $\phi(j,g)$ and sources S(j) are iteratively calculated at an instant t, the said neutron fluxes and said sources being initialized with the values obtained by said process at a preceding instant t − 1.

$\left(\begin{smallmatrix} 10 \\ 5 \end{smallmatrix} B\right)$

$\left(\begin{smallmatrix} 1 \\ 1 \end{smallmatrix} H_2 \begin{smallmatrix} 16 \\ 8 \end{smallmatrix} O\right)$

8

12

2

4

10

6

FIG. 1

## FIG. 2a

```
                                    ┌─────────┐
                                    │  DEBUT  │
                                    └─────────┘
                                         │
                                         ▼
                    ┌────────────────────────────────┐
                    │  S(j)^(o) = 1                   │
                    │  φ(j,g)^(o) = 0                 │
                    │                        J        │
                    │  P(j)^(o) = P/ ∑ v j           │
                    │                       j=1       │
                    │  n = 0                          │
                    └────────────────────────────────┘ ──── 14
                                         │
                                         ▼
                              ┌──────────────────┐
                              │   n = n + 1      │ ──── 16
                              └──────────────────┘
                                         │                    18
                                         ▼
          ┌────────────────────────────────────────────────────┐
          │  calcul des premières composantes de flux          │
          │  φ^o (j,g)^(n) = f ([Σg], S(k)^(n-1))              │
          └────────────────────────────────────────────────────┘
                                         │                    20
                                         ▼
          ┌────────────────────────────────────────────────────┐
          │  mesure des paramètres physiques du coeur et       │
          │  calcul des probabilités d'interaction réelles     │
          │  des neutrons                                       │
          │  Σs(j,g→g')^(n), Σa(j,g)^(n), Σt(j,g)^(n) et Σf(j,g)^(n)│
          └────────────────────────────────────────────────────┘
                                         │                    22
                                         ▼
          ┌────────────────────────────────────────────────────┐
          │  calcul des secondes composantes de                │
          │  flux neutronique φ^1(j,g)^(n)                     │
          │                                                    │
          │  en fonction de φ^o(j,g)^(n), des pro-             │
          │  babilités d'interaction réelles                   │
          │  des neutrons et de probabilités                   │
          │  d'interaction prédéterminée des neutrons          │
          └────────────────────────────────────────────────────┘
                                         │                    24
                                         ▼
          ┌────────────────────────────────────────────────────┐
          │  φ(j, g)^(n) = φ^o (j,g)^(n) + φ^1 (j,g)^(n)       │
          └────────────────────────────────────────────────────┘
                                         │
                                         ▼
```

*26*

calcul de nouvelles sources

$$NS(j)^{(n)} = \sum_{j=1}^{J} v . \Sigma f(j,g)^{(n)} . \phi(j,g)^{(n)}$$

*28*

calcul des sources

$$S(j)^{(n)} = \frac{NS(j)^{(n)}}{\sum\limits_{j=1}^{J} NS(j)^{(n)}}$$

*30*

$$P(j) = \frac{P}{\sum\limits_{j=1}^{J} vj} . \frac{S(j)^{(n)}}{\frac{1}{J} . \sum\limits_{j=1}^{J} S(j)^{(n)}}$$

NON

test
de convergence

sur $S(j)^{(n)}$ et

$\lambda^{(n)} = \dfrac{NS^{(n)}}{S^{(n-1)}}$

*32*

OUI

$$P(j) = P(j)^{(n)}$$
$$\phi(j,g) = \phi(j,g)^{(n)}$$

*34*

Commande des barres de
commande et/ou de la
concentration en bore
selon $\phi(j,g)$ et P(j)

*36*

FIN

# FIG. 2b